# EUROPÄISCHE PATENTANMELDUNG

(11) **EP 1 067 219 A1**
(43) Veröffentlichungstag der Anmeldung: **10.01.2001**
(21) Anmeldenummer: 00111459.4
(22) Anmeldetag: 27.05.2000
(51) Int. Cl.: C25D 13/24, B01D 61/14, C02F 1/44

(54) **Verfahren zur Mikrofiltration**

(30) Priorität: 07.07.1999 DE 19931261
(71) Anmelder: Damm, Roland, 57439 Attendorn (DE); RIK Wasseraufbereitungstechnik u.-vertriebs GmbH, 48249 Dülmen (DE)
(72) Erfinder: Damm, Roland, 57439 Attendorn (DE)
(74) Vertreter: Köchling, Conrad-Joachim

(57) **Zusammenfassung**

Um ein Verfahren zur Mikrofiltration von bei dem kathodischen Tauchlackieren anfallender Flüssigkeit mit Lackpartikeln, wobei die Flüssigkeit aus vorzugsweise entmineralisiertem Wasser ggf. mit geringen Lösungsmittelanteilen und mit Lackfestkörperpartikeln insbesondere von bis zu 20 % (Volumenprozent) besteht, die durch eine Filtermembran gefiltert wird, so daß das Filtrat mindestens nahezu festkörperfrei ist, zu schaffen, bei der ein besseres Spülverhalten auch mit aggressiven Spülmitteln erreicht wird, bei dem eine hohe, fast unbegrenzte Lebensdauer der Filtermembran erreicht wird, bei dem nach dem Spülen wieder eine mindestens annähernd 100% ige Filterleistung durch die Filtermembran erreicht wird, wobei zudem die Filtermembran pH-stabil und beständig gegen Lösungsmittel sein soll, welches beim Spülen eingesetzt werden kann, wird vorgeschlagen, daß die Flüssigkeit durch eine keramische Filtermembran gefiltert und die keramische Filtermembran elektrisch geerdet wird.

## Beschreibung

Die Erfindung betrifft ein Verfahren zur Mikrofiltration von bei dem kathodischen Tauchlackieren anfallender Flüssigkeit mit Lackpartikeln, wobei die Flüssigkeit aus vorzugsweise entmineralisiertem Wasser ggf. mit geringen Lösungsmittelanteilen und mit Lackfestkörperpartikeln von bis zu 20 % (Volumenprozent) besteht, die durch eine Filtermembran gefiltert wird, so daß das Filtrat mindestens nahezu festkörperfrei ist.

Es ist im Stand der Technik bekannt, das Elektrotauchlackieren als Beschichtungsverfahren, welches elektrochemische Vorgänge nutzt, um Farbe abzuscheiden, zu benutzen. Grundsätzliches physikalisches Prinzip des Elektrotauchlackierens ist, daß Materialien mit unterschiedlicher elektrischer Ladung sich anziehen. Ein Elektrotauchsystem legt eine Gleichspannung an ein Werkstück an, welches in ein Lackbad mit gegensätzlich geladenen Lackpartikeln getaucht ist. Die Lackpartikel werden von dem Werkstück angezogen, auf ihm abgeschieden und bilden dort einen gleichmäßigen Film über die gesamte Oberfläche. Sobald die Beschichtung die vorgegebenen Schichtdicke erreicht hat, wirkt die Beschichtung isolierend, so daß eine weitere Abscheidung von Lackpartikeln nicht erfolgt. Je nach Polarität der Spannung unterscheidet man zwischen der kathodischen und der anodischen Elektrotauchbeschichtung. Bezüglich der Erfindung ist im wesentlichen die kathodische Elektrotauchbeschichtung relevant. Dabei wird an die eine Elektrode der Pluspol einer Gleichspannungsquelle angelegt, während an das zu beschichtende Werkstück, welches in das Bad eingetaucht wird, negative Spannung angelegt wird. Die Lackpartikel werden so positiv aufgeladen und durch die negative Aufladung des zu beschichtenden Werkstückes von diesem angezogen und auf diesem abgeschieden.

Üblicherweise erfolgt der Elektrotauchprozeß in mehreren Stufen, wobei zunächst eine Vorbehandlung erfolgt, bei der das zu beschichtende Teil gereinigt und ggf. mittels einer Beschichtung mit einem Primer (beispielsweise Phosphatierung) vorbehandelt wird. Danach werden die entsprechenden Teile in das Lackbad getaucht. Anschließend wird entsprechend der gewünschten Polung die Spannung zwischen Werkstück und Gegenelektrode angelegt. Die im Tauchbad enthaltenen Farbpartikel werden durch die sich ausbildenden elektrischen Feldlinien von dem zu beschichtenden Teil angezogen und auf diesem abgeschieden.

Nach dem Ende der Beschichtungsphase werden die Werkstücke aus dem Bad entnommen und abgespült, um anhaftende, nicht abgeschiedene Farbpartikel zurückzugewinnen. Anschließend erfolgt eine Aushärtung beispielsweise in einem Einbrennofen. Das Badmaterial des Elektrotauchbades besteht im wesentlichen zu 80-90 % aus entmineralisiertem Wasser und zu 10-20 % aus Lackfestkörperpartikeln, wobei ggf. auch ein Lösemittelanteil von ca. 2 % vorgesehen werden kann. Als Lösemittel kommen beispielsweise mehrwertige Alkohole in Betracht. Das entmineralisierte Wasser fungiert als Trägersubstanz für die Lackfestkörper, die sich in konstanter Bewegung befinden. Die Lackfestkörper bestehen aus Bindemittel und Pigment. Das Bindemittel bestimmt die späteren Filmeigenschaften wie Korrosionsschutz, Beständigkeit und Härte. Die Pigmente bestimmen den Farbton und Glanz.

Wegen des ständigen Verbrauchs von Lackfestkörperpartikeln wird ständig oder in Stufen Flüssigkeit mit Lackfestkörperpartikeln zugeführt. Desweiteren wird über eine Mikrofiltration überschüssige Flüssigkeit aus dem Tauchbad abgezogen und über eine Filtermembran filtriert. Das Filtrat wird zur Spülung der Teile benutzt und im Kreislauf zum Tank für die Tauchlackierung zurückgeführt.

Bisher ist es üblich, als Filtermembran organische Membranen beispielsweise auf Zellulosebasis einzusetzen. Hiermit wird ein weitgehend partikelfreies Filtrat für weitergehende Verwendung im Prozeß beispielsweise zum Spülen erzeugt. Bei solchen organischen, insbesondere polymeren Membranen ist die Lebensdauer relativ gering. Insbesondere haben solche Membranen auch ein relativ schlechtes Spülverhalten, so daß sie beim Spülen zum Zwecke der Reinigung der Membran nicht wieder auf die Ausgangsleistung zurückgeführt werden können, sondern sich über längere Zeitdauer auch trotz des Spülens weitgehend zusetzten. Auch sind solche Membranen häufig nicht beständig Lösungsmittel, die deswegen nicht zum Spülen eingesetzt werden können.

Ausgehend von diesem Stand der Technik liegt der Erfindung die Aufgabe zugrunde, ein Verfahren und eine Vorrichtung gattungsgemäßer Art zu schaffen, bei der ein besseres Spülverhalten auch mit aggressiven Spülmitteln erreicht wird, bei dem eine hohe, fast unbegrenzte Lebensdauer der Filtermembran erreicht wird, bei dem nach dem Spülen wieder eine mindestens annähernd 100%ige Filterleistung durch die Filtermembran erreicht wird, wobei zudem die Filtermembran pH-stabil und beständig gegen Lösungsmittel sein soll, welches beim Spülen eingesetzt werden kann.

Zur Lösung dieser Aufgabe wird verfahrensmäßig vorgeschlagen, daß die Flüssigkeit durch eine keramische Filtermembran gefiltert und die keramische Filtermembran elektrisch geerdet wird.

Dabei ist bevorzugt vorgesehen, daß als Filtermembran eine keramische α-Aluminiumoxid-Membran verwendet wird.

Alternativ kann auch vorgesehen sein, daß als Filtermembran eine keramische Siliziumkarbid-Membran verwendet wird.

Der Einsatz solcher keramischer Filtermembranen führt dazu, daß ein besseres Spülverhalten auch mit aggressivem Spülmittel erreicht wird, weil die keramischen Filtermembranen gut und auch mit aggressivem Spülmittel spülbar sind, ohne daß sie dadurch zerstört werden. Aus diesem Grunde haben solche Filtermembranen eine nahezu unbegrenzte Lebensdauer. Auch wird nach dem Spülen praktisch die hundertprozentige Filterleistung wieder zur Verfügung gestellt. Solche Membranen sind auch pH-stabil.

Solche keramischen Filtermembranen, insbesondere wenn sie aus α-Aluminiumoxid bestehen oder auch wenn sie aus Siliziumkarbid bestehen, weisen eine leicht negative Ladung auf ihrer Oberfläche auf. Aus diesem Grunde setzt sich die Membran in kathodischen Tauchlackbädern durch entsprechende Lackpartikel sofort zu, da die positiv aufgeladenen Lackpartikel sich an der negativ geladenen Oberfläche der Membran absetzen.

Um dies zu verhindern, ist die keramische Filtermembran elektrisch geerdet. Hierdurch wird ein Abscheiden von Lackpartikeln auf der Oberfläche der Membran vermieden, so daß der Filtervorgang über lange Zeiträume sehr wirksam ablaufen kann. Es wird hiermit ein partikelfreies Filtrat für die weitergehende Verwendung im Prozeß, beispielsweise zum Spülen der beschichteten Teile zur Verfügung gestellt.

Gegenstand der Erfindung ist ferner eine Vorrichtung zur Mikrofiltration von beim kathodischen Tauchlackieren anfallender Flüssigkeit, bestehend aus vorzugsweise entmineralisiertem Wasser mit geringen Lösemittelanteilen und Lackfestkörperpartikeln von bis zu 20 % (Volumenprozent), bestehend aus einem Behälter zur Aufnahme der Flüssigkeit sowie einer in die Behälterwandung oder einen Stutzen des Behälters eingesetzte Filtermembran, die vorzugsweise mittels einer Dichtung in die entsprechende Ablauföffnung eingesetzt ist, wobei die Flüssigkeit zum Zwecke der Filtration durch die Filtermembran fließt, insbesondere gesaugt oder gedrückt wird.

Zur Lösung der oben geschilderten Aufgabe ist dabei vorgesehen, daß die Filtermembran als keramische Filtermembran ausgebildet ist und daß die Filtermembran zur Beseitigung von deren negativen Ladung geerdet ist.

Dabei ist bevorzugt vorgesehen, daß die Filtermembran aus α-Aluminiumoxid besteht.

Auch kann bevorzugt vorgesehen sein, daß die Filtermembran aus Siliziumkarbid besteht.

Desweiteren ist bevorzugt vorgesehen, daß die Filtermembran über eine Erdungsleitung an den Behälter- oder Vorrichtungsrahmen angeschlossen ist, der geerdet ist.

Die Filtermembran weist die schon oben beschriebenen Vorteile auf. Da die Filtermembran unter Zwischenlage von Dichtungen oder Dichtringen in die entsprechende Einsatzöffnung des Gehäuses oder dergleichen eingesetzt ist, ist vorzugsweise die Filtermembran unmittelbar mit einer Erdleitung verbunden, die entweder direkt an eine erdpotential führende Einrichtung oder Schiene gelegt ist, oder aber die an den Behälter oder Vorrichtungsrahmen angeschlossen ist, der ohnehin geerdet ist.

Alle Merkmale der Erfindung werden als wesentlich angesehen.

## Patentansprüche

1. Verfahren zur Mikrofiltration von bei dem kathodischen Tauchlackieren anfallender Flüssigkeit mit Lackpartikeln, wobei die Flüssigkeit aus vorzugsweise entmineralisiertem Wasser ggf. mit geringen Lösungsmittelanteilen und mit Lackfestkörperpartikeln insbesondere von bis zu 20 % (Volumenprozent) besteht, die durch eine Filtermembran gefiltert wird, so daß das Filtrat mindestens nahezu festkörperfrei ist, **dadurch gekennzeichnet,** daß die Flüssigkeit durch eine keramische Filtermembran gefiltert und die keramische Filtermembran elektrisch geerdet wird.

2. Verfahren nach Anspruch 1, **dadurch gekennzeichnet,** daß als Filtermembran eine keramische α-Aluminiumoxid-Membran verwendet wird.

3. Verfahren nach Anspruch 1, **dadurch gekennzeichnet,** daß als Filtermembran eine keramische Siliziumkarbid-Membran verwendet wird.

4. Vorrichtung zur Mikrofiltration von beim kathodischen Tauchlackieren anfallender Flüssigkeit, bestehend aus vorzugsweise entmineralisiertem Wasser mit geringen Lösemittelanteilen und Lackfestkörperpartikeln von vorzugsweise bis zu 20 % (Volumenprozent), bestehend aus einem Behälter zur Aufnahme der Flüssigkeit sowie einer zum Beispiel in die Behälterwandung oder einen Stutzen des Behälters eingesetzte Filtermembran, die vorzugsweise mittels einer Dichtung in die entsprechende Ablauföffnung eingesetzt ist, wobei die Flüssigkeit zum Zwecke der Filtration durch die Filtermembran fließt, insbesondere gesaugt oder gedrückt wird, **dadurch gekennzeichnet,** daß die Filtermembran als keramische Filtermembran ausgebildet ist und daß die Filtermembran zur Beseitigung von deren negativer Ladung geerdet ist.

5. Vorrichtung nach Anspruch 4, **dadurch gekennzeichnet,** daß die Filtermembran aus α-Aluminiumoxid besteht.

6. Vorrichtung nach Anspruch 4, **dadurch gekennzeichnet,** daß die Filtermembran aus Siliziumkarbid besteht.

7. Vorrichtung nach einem der Ansprüche 4 bis 6, **dadurch gekennzeichnet,** daß die Filtermembran über eine Erdungsleitung an den Behälter- oder Vorrichtungsrahmen angeschlossen ist, der geerdet ist.
